# EUROPEAN PATENT APPLICATION

(11) **EP 3 285 179 A1**
(43) Date of publication of application: **21.02.2018**
(21) Application number: 16779515.2
(22) Date of filing: 25.03.2016
(51) Int. Cl.: G06F 17/30

(54) **DATA TRANSFER METHOD AND DEVICE**

(30) Priority: 14.04.2015 CN 201510175942
(71) Applicant: Alibaba Group Holding Limited, Grand Cayman (KY)
(72) Inventor: ZHANG, Di, Hangzhou 310099 (CN)
(74) Representative: Conroy, John
(86) International application number: PCT/CN2016/077299
(87) International publication number: WO 2016/165540

(57) **Abstract**

The present application provides a data transfer method and device. The method comprises: receiving data-receiving party account information input by a user; querying identity information corresponding to the data-receiving party account information; querying candidate data-receiving party account information corresponding to the identity information and satisfying a pre-determined condition; reminding the user of the candidate data-receiving party account information; and in response to the user's confirmation for the candidate data-receiving party account information, executing the data transfer according to the candidate data-receiving party account information confirmed by the user. In the present application, by searching, account information corresponding to identity information corresponding to receiving party account information input by a user, for account information of which the degree of similarity with the receiving party account information input by the user is greater than a pre-determined threshold, and reminding the user, the situation where data is transferred to a wrong receiving party due to that the user has input wrong account information is avoided, improving the accuracy and security in data transfer.

## Description

### Technical field

The present application relates to the field of data processing, and particularly to a data transfer method and device.

### Background art

At present, in scenarios of data transfer, a user account is generally registered through an e-mail account or a cell phone number, thus the situation in which wrong account information is input due to similarity between accounts, resulting in that a data resource is transferred to a wrong receiving party account may occur.

At the present stage, the conventional data transfer processing and verification flow is as follows: a user opens a data transfer page, and inputs account information in a specified input field, wherein the account information is generally an e-mail account or a cell phone number of the user; after the user inputs the account information, if it is the first time to transfer data to a receiving party, the name of the receiving party would generally be partially displayed, for example, when the user name corresponding to the receiving party account is "Zhang San", then it is displayed as "* San "; the user needs to complete the full name manually and then submit; and the system carries out a data transfer operation according to an amount of data transfer input by the user after it is verified that the account information matches the user name.

It can be seen therefrom that only whether account information matches a name or not is verified in a data transfer operation in the prior art; however, in fact, most users get used to registering an e-mail account relevant to their names, therefore, users with the same name often have very similar e-mail accounts, for example, e-mail accounts of zhangsan01@xxx.com and zhangsan001@xxx.com are very similar, and the user names corresponding thereto are both Zhang San; therefore, in data resource transferring, if a user inputs wrong receiving party account information, the issue cannot be found only through name verification.

### Summary of the Invention

A purpose of the present application is to provide a data transfer method to avoid the loss caused by transferring data to a wrong account due to wrong receiving party account information input by a user.

According to one aspect of the present application, a data transfer method is provided. The method comprises:
receiving data-receiving party account information input by a user;
querying identity information corresponding to the data-receiving party account information;
querying candidate data-receiving party account information corresponding to the identity information and satisfying a pre-determined condition;
reminding the user of the candidate data-receiving party account information; and
in response to the user's confirmation for the candidate data-receiving party account information, executing the data transfer according to the candidate data-receiving party account information confirmed by the user.

According to another aspect of the present application, a data transfer device is also provided. The device comprises:
a receiving unit configured to receive data-receiving party account information input by a user;
a first query unit configured to query identity information corresponding to the data-receiving party account information;
a second query unit configured to query candidate data-receiving party account information corresponding to the identity information and satisfying a pre-determined condition;
a reminding unit configured to remind the user of the candidate data-receiving party account information; and
an execution unit configured to, in response to the user's confirmation for the candidate data-receiving party account information, execute the data transfer according to the candidate data-receiving party account information confirmed by the user.

Comparing with the prior art, the embodiments of the present application have the following advantages: by querying whether account information corresponding to identity information corresponding to receiving party account information input by a user contains account information of which the degree of similarity with the receiving party account information input by the user is greater than a pre-determined threshold, and reminding the user so that the user checks and verifies the receiving party account information according to the reminding, the situation where data is transferred to a wrong receiving party due to that it is easy for the user to input wrong information because the same identity information corresponds to a plurality of pieces of account information which are highly similar is avoided, improving the accuracy and security in data transfer and avoiding user loss.

### Brief description of the drawings

Through reading the detailed description hereinafter of the non-limiting embodiments with reference to the following accompanying drawings, the other features, objectives, and advantages of the present application will become more apparent:
Fig. 1 is a flow chart of a method provided in an embodiment of the present application;
Fig. 2 is a flow chart of a method provided in a preferred embodiment of the present application;
Fig. 3 is a flow chart of a method provided in another embodiment of the present application;
Fig. 4 is a flow chart of a method provided in a further embodiment of the present invention;
Fig. 5 is a schematic diagram of a device provided in an embodiment of the present application;
Fig. 6 is a schematic diagram of a device provided in another embodiment of the present application;
Fig. 7 is a schematic diagram of a device provided in a further embodiment of the present application; and
Fig. 8 is a schematic diagram of a device provided in a further still embodiment of the present application.

The same or similar reference numerals in the accompanying drawings indicate the same or similar components.

### Detailed description

Before discussing exemplary embodiments in more details, it should be noted that some exemplary embodiments are described to be the processing or method depicted in the flow charts. Although the flow charts describe various operations as sequential processing, many operations therein can be carried out in parallel, concurrently or simultaneously. Additionally, the order of the various operations can be rearranged. When operations are completed, the processing can be ended, but there can also be additional steps which are not included in the drawings. The processing can correspond to a method, a function, a procedure, a sub-routine, a sub-program, etc.

"Computer device", also referred to as "computer", refers to an intelligent electronic device that can execute pre-determined processing procedure such as numerical computation and/or logic computation by running a pre-determined program or instruction, which can comprise a processor and a memory; and the pre-determined processing procedure is executed by the processor executing instructions pre-stored in the memory, or executed by hardware such as ASIC, FPGA and DSP, or by a combination of the both. Computer devices include, but not limited to, servers, personal computers, notebook computers, tablet computers, smart phones, etc.

The computer devices include user equipment and network devices. Wherein, the user equipment includes, but not limited to, computers, smart phones, PDAs, etc.; the network devices include, but not limited to, a single network server, a server group composed of a plurality of network servers or a cloud formed by a considerable number of computers or network servers based on cloud computing, wherein cloud computing is one kind of distributed computing, and a super virtual computer composed of a group of computer clusters loosely coupled. Wherein, the computer device may operate alone to realize the present application, and may also access a network and realize the present application via interactive operations with other computer devices in the network. Wherein, the network in which the computer device is located comprises, but not limited to, Internet, Wide Area Network, Metropolitan Area Network, Local Area Network, VPN network, and the like.

It should be noted that the user equipment, the network devices and the network are merely exemplary, and other existing or possible computer devices or network emerging in future, if applicable to the present application, should also be included in the scope of protection of the present application, and are incorporated herein by reference.

The methods discussed later (some of which are illustrated by flow charts) can be implemented by hardware, software, firmware, middleware, microcode, hardware description language or any combination thereof. When implemented by software, firmware, middleware or microcode, a program code or a code segment for carrying out a necessary task may be stored in a machine or computer readable medium (such as a storage medium). (One or more) processors may carry out necessary tasks.

Specific structural or functional details disclosed herein are merely representative, and are intended for describing the exemplary embodiments of the present application. However, the present application can be particularly realized via many alternative forms, and should not be construed as being limited to embodiments described herein.

It should be understood that, although terms "first", "second", etc. may be used herein to describe various units, these units should not be limited by these terms. The use of these terms is merely to distinguish one unit from another. By way of example, without departing from the scope of exemplary embodiments, a first unit may be referred to as a second unit, and similarly, a second unit can be referred to as a first unit. The term "and/or" used herein comprises any or all combinations of one or more listed associated items.

The terms used here are merely for describing particular embodiments, and not intended to limit the exemplary embodiments. Unless explicitly otherwise in the context, singular form "a" and "an" used herein also intend to include plural forms. It should also be understood that the terms "comprise" and/or "contain" used herein specify the existence of stated features, integers, steps, operations, units and/or components, but do not exclude the existence or addition of one or more other features, integers, steps, operations, units, components and/or combinations thereof.

It should also be mentioned that in some alternative implementations, the functions/actions mentioned can occur in a sequence different from that indicated in the drawings. By way of example, depending on the functions/actions involved, two figures shown successively can actually be executed basically at the same time or sometimes can be executed in an opposite order.

The present application is further described in detail in conjunction with the drawings.

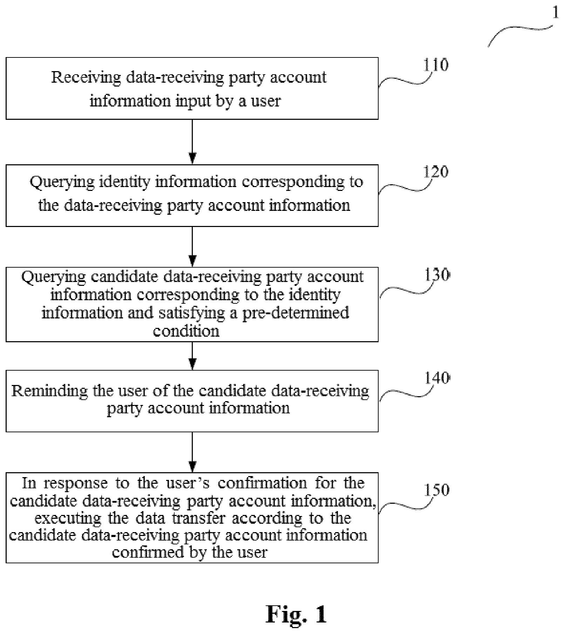

Fig. 1 is a flow chart of a data transfer method provided in an embodiment of the present application. The data transfer method 1 according to the present application at least comprises the following steps:
In step 110, data-receiving party account information input by a user is received.

The data transfer method in the present application can be realized on a third-party interaction platform. The third-party interaction platform comprises, but not limited to, banks, payment companies, etc. When a user applies for registering an account on the third party interaction platform, registration or verification may be conducted via an e-mail account or a cell phone account, and the e-mail account or cell phone account used in registration can also be used for login and data transfer to other accounts; that is to say, data transfer from one account to another account is conducted based on the third party interaction platform; therefore, received data-receiving party account information input by the user may comprise an e-mail account, a cell phone number, etc., for example, an e-mail account of zhangsan01@xxx.com. When the user logs into the third-party interaction platform to transfer data to other users, by inputting data-receiving party account information in a specified input field, data is transferred to an account corresponding to the input account information.

In step 120, identity information corresponding to the data-receiving party account information is queried.

The identity information corresponding to the receiving party account information comprises the user name of the receiving party account. However, the present application is not limited to this.

In an embodiment, when identity information corresponding to the data-receiving party account information is queried, an account (member name, member ID) corresponding to the data-receiving party account information can be queried firstly, and then identity information corresponding to the data-receiving party account information is determined according to the account found. For example, if a user inputs data-receiving party account information as zhangsan01@xxx.com, it is firstly found that an account corresponding to the account information is "ZhangSan01", and it is then found that the identity information corresponding to the account "ZhangSan01" is "ZhangSan", thus it is determined that the identity information corresponding to the data-receiving party account information is "ZhangSan".

In step 130, candidate data-receiving party account information corresponding to the identity information and satisfying a pre-determined condition is queried.

Due to the case where different account information corresponds to the same identity information, for example, when identity information corresponding to an receiving party account information is the user name of a receiving party account, the case of identical names exists, therefore, the same identity information corresponds to at least one piece of account information, and therefore, the identity information corresponding to the data-receiving party account information input by the user corresponds to at least one piece of account information.

The pre-determined condition comprises a degree of similarity with the data-receiving party account information input by the user being greater than a pre-determined threshold. If the account information corresponding to the identity information includes account information of which the degree of similarity with the receiving party account information input by the user is greater than a pre-determined threshold, then the same identity information corresponds to a plurality of pieces of similar account information, rendering it being easy for the user to input wrong receiving party account information (the user inputs account information similar to the right receiving party account information) and transfer data to the wrong account, leading to the loss of user data resource. Therefore, for the above-mentioned particular situation, in the present application, during the process of data transfer, candidate data-receiving party account information, which corresponds to identity information corresponding to the receiving party account information input by the user and of which the degree of similarity with the data-receiving party account information input by the user is greater than a pre-determined threshold, is queried, and the user is reminded for confirmation, thus avoiding the situation where the same identity information corresponds to a plurality of pieces of similar account information, rendering the user inputting wrong receiving party account information, leading to data transfer to the wrong account.

Specifically, the degree of similarity of at least one piece of account information corresponding to the identity information with data-receiving party account information input by the user can be calculated by a pre-determined similarity algorithm; and then, according to whether the degree of similarity obtained through calculation is greater than a pre-determined threshold, candidate data-receiving party account information corresponding to the identity information and satisfying a pre-determined condition is determined. For example, a pre-determined threshold is 80%, the degree of similarity of account information corresponding to the identity information with data-receiving party account information input by the user is calculated respectively, obtaining that in the account information corresponding to the identity information, account information of which the degree of similarity with the data-receiving party account information input by the user is greater than 80% is respectively zhangsan01@xxx.com, zhangsan001@xxx.com, zhang.san01@xxx.com, and zhangsan.01@xxx.com, then the above-mentioned four pieces of account information are determined as selected data-receiving party account information corresponding to the identity information and satisfying the pre-determined condition. The at least one piece of account information corresponding to the identity information comprises data-receiving party account information input by the user; therefore, the candidate data-receiving party account information corresponding to the identity information and satisfying the pre-determined condition comprises at least the data-receiving party account information input by the user. That is to say, if the candidate data-receiving party account information is one piece of candidate data-receiving party account information, then the candidate data-receiving party account information is the data-receiving party account information input by the user; and if the candidate data-receiving party account information includes a plurality of pieces of candidate data-receiving party account information, then one of the plurality of pieces of candidate data-receiving party account information is the data-receiving party account information input by the user (of which the degree of similarity with the data-receiving party account information input by the user is 100%).

The specific implementation of step 130 includes at least one of the following:
(1) a list of corresponding relationships between identity information and candidate data-receiving party account information is directly queried for candidate data-receiving party account information corresponding to the identity information and satisfying the pre-determined condition.

Wherein, candidate data-receiving party account information corresponding to various identity information and satisfying the pre-determined condition is pre-stored in the list of corresponding relationships between identity information and candidate data-receiving party account information, e.g., candidate data-receiving party account information corresponding to various identity information and satisfying a pre-determined condition which is recorded during data transfer; or candidate data-receiving party account information corresponding to various identity information and satisfying the pre-determined condition which is recorded according to the feedback of the user. For example, according to user complaint information, wrong account information input by the user due to that the same identity information corresponds to a plurality of pieces of similar (the degree of similarity greater than a pre-determined threshold) account information is recorded in data transfer processes.

Therefore, candidate data-receiving party account information corresponding to the identity information and satisfying a pre-determined condition can be quickly found in the list of corresponding relationships between identity information and candidate data-receiving party account information, thus accelerating the speed of account verification.
(2) An account information database is queried for candidate data-receiving party account information corresponding to the identity information and satisfying a pre-determined condition.

Wherein, corresponding relationships between all identity information and account information are recorded in the account data information database (in the third-party interaction platform). Specifically, account information corresponding to the identity information is firstly found in the account data information database according to the identity information, and then whether the account information corresponding to the identity information includes candidate data-receiving party account information satisfying a pre-determined condition or not is determined.

It should be understood that step 130 can be implemented with any one or two of the above implementations.

In step 140, the user is reminded of the candidate data-receiving party account information.

For example, if it is found that candidate data-receiving party account information corresponding to identity information of "ZhangSan" and satisfying a pre-determined condition includes a plurality of pieces of candidate data-receiving party account information which are respectively zhangsan01@xxx.com, zhangsan001@xxx.com, zhang.san01@xxx.com and zhangsan.01@xxx.com, then the user is reminded of the above-mentioned candidate data-receiving party account information, so that the user confirms the data-receiving party account information from the above-mentioned candidate data-receiving party account information according to the reminding.

In an embodiment of the present application, the particular implementation of step 140 is: reminding the user of the degree of similarity of the candidate data-receiving party account information with the data-receiving party account information input by the user and the candidate data-receiving party account information in an associated manner. For example, when reminding the user of the various candidate data-receiving party account information, the degree of similarity of each candidate data-receiving party account information with the data-receiving party account information input by the user is displayed after the candidate data-receiving party account information at the same time.

In another embodiment of the present application, the particular implementation of step 140 is: if the candidate data-receiving party account information includes a plurality of pieces of candidate data-receiving party account information, then reminding the user of the plurality of pieces of candidate data-receiving party account information in a pre-determined order according to the degree of similarities of the plurality of pieces of candidate data-receiving party account information with the data-receiving party account information input by the user. For instance, the plurality of pieces of candidate data-receiving party account information are displayed to the user in an order of the degree of similarity from high to low.

In step 150, in response to the user's confirmation for the candidate data-receiving party account information, the data transfer is executed according to the candidate data-receiving party account information confirmed by the user.

If the candidate data-receiving party account information includes a plurality of pieces of candidate data-receiving party account information, the user's confirmation for the candidate data-receiving party account information means the user's selection from the plurality of pieces of candidate data-receiving party account information. Therefore, in such a situation, in response to the user's selection, data transfer is executed according to the candidate data-receiving party account information selected by the user; that is to say, data transfer to the account corresponding to the candidate data-receiving party account information selected by the user is executed.

For example, the user is reminded that candidate data-receiving party account information corresponding to identity information of "ZhangSan" and satisfying a pre-determined condition includes a plurality of pieces of candidate data-receiving party account information which are respectively zhangsan01@xxx.com, zhangsan001@xxx.com, zhang.san01@xxx.com and zhangsan.01@xxx.com; if the candidate data-receiving party account information selected by the user from the above-mentioned candidate data-receiving party account information is zhangsan01@xxx.com, then data transfer to the account corresponding to the account information of zhangsan01@xxx.com is executed.

If the candidate data-receiving party account information is one piece of candidate data-receiving party account information, that is to say, the candidate data-receiving party account information is the data-receiving party account information input by the user, then the user's confirmation for candidate data-receiving party account information is that the user confirms that the input data-receiving party account information is the right data-receiving party account information. Therefore, in such a situation, in response to the user's confirmation for the input data-receiving party account information, the data transfer is executed according to the data-receiving party account information input by the user.

In the technical solutions provided in the embodiments of the present application: by querying whether account information corresponding to identity information corresponding to receiving party account information input by a user contains account information of which the degree of similarity with the receiving party account information input by the user is greater than a pre-determined threshold, and reminding the user so that the user checks and verifies the receiving party account information according to the reminding, the situation where data is transferred to a wrong receiving party due to that it is easy for the user to input wrong information because the same identity information corresponds to a plurality of pieces of account information which are highly similar is avoided, improving the accuracy and security in data transfer and avoiding user losses.

Based on the above embodiments, preferably, the particular implementation of step 130 comprises step 131 and step 132.

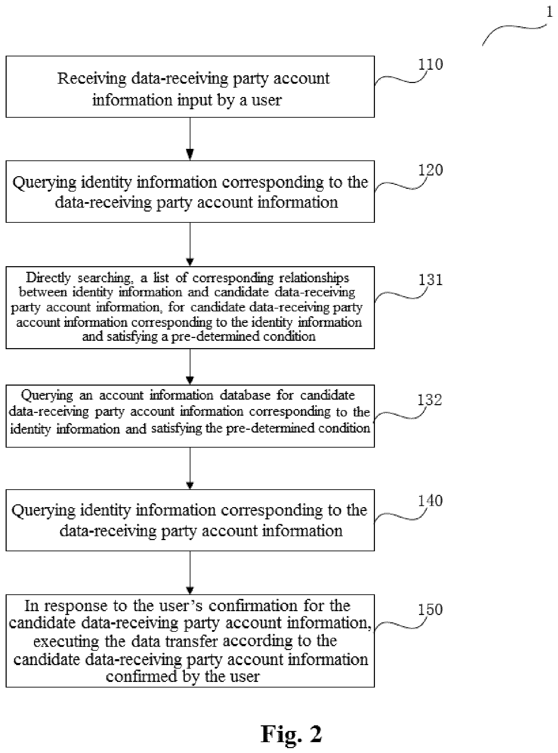

With reference to figure 2, in step 131, a list of corresponding relationships between identity information and candidate data-receiving party account information is directly queried for candidate data-receiving party account information corresponding to the identity information and satisfying the pre-determined condition.

Wherein, candidate data-receiving party account information corresponding to various identity information and satisfying the pre-determined condition is pre-stored in the list of corresponding relationships between identity information and candidate data-receiving party account information. If candidate data-receiving party account information corresponding to the identity information and satisfying the pre-determined condition is directly found in the list of corresponding relationships between identity information and candidate data-receiving party account information, then the following steps 140 and 150 can be performed directly, thus completing this data transfer; in this way, the probability and number of times of traversing and querying the account information database for candidate data-receiving party account information corresponding to the identity information and satisfying the pre-determined condition may be lowered, thus optimizing the system performance.

If no candidate data-receiving party account information corresponding to the identity information and satisfying the pre-determined condition is found in the list of corresponding relationships between identity information and candidate data-receiving party account information, then step 132 is conducted.

In step 132, an account information database is queried for candidate data-receiving party account information corresponding to the identity information and satisfying a pre-determined condition.

Wherein, if no candidate data-receiving party account information corresponding to the identity information and satisfying the pre-determined condition is found in the list of corresponding relationships between identity information and candidate data-receiving party account information, then it indicates that the situation where a user inputs wrong account information and transfers data to a wrong account due to that the identity information corresponds to a plurality of pieces of account information, of which the degree of similarities are greater than the pre-determined threshold, has never occurred in the past data transfer processes, then the query of candidate data-receiving party account information corresponding to the identity information and satisfying a pre-determined condition in the account information database is continued. Corresponding relationships between all identity information and account information are recorded in the account data information database (in the third-party interaction platform). All account information corresponding to the identity information can be found in the account data information database, and the account data information database comprises data-receiving party account information input by the user; therefore, as a matter of fact, at least one piece of candidate data-receiving party account information corresponding to the identity information and satisfying the pre-determined condition, i.e. the data-receiving party account information input by the user, can be found in the account data information database.

It should be noted that, if candidate data-receiving party account information corresponding to the identity information and satisfying the pre-determined condition has been found at step 131, then step 132 can still be executed; By doing so, the case of incomplete query caused by the fact that although no candidate data-receiving party account information corresponding to the identity information and satisfying the pre-determined condition is found in the list of corresponding relationships between identity information and candidate data-receiving party account information, candidate data-receiving party account information corresponding to the identity information and satisfying the pre-determined condition still exists in the account information database can be avoided, thus improving the accuracy of the account in data transfer.

Based on the embodiment shown in figure 2, the method can further comprise step 160.

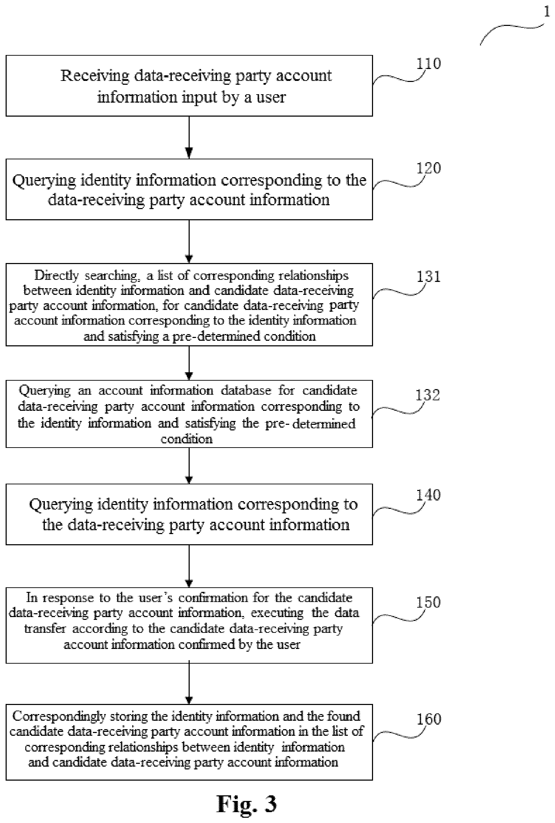

With reference to figure 3, in step 160, after the candidate data-receiving party account information corresponding to the identity information and satisfying a pre-determined condition is found in the account information database, the identity information and the found candidate data-receiving party account information are correspondingly stored in the list of corresponding relationships between identity information and candidate data-receiving party account information.

Specifically, if no candidate data-receiving party account information corresponding to the identity information and satisfying the pre-determined condition is found in the list of corresponding relationships between identity information and candidate data-receiving party account information during a data transfer process, then, if candidate data-receiving party account information corresponding to the identity information and satisfying a pre-determined condition (candidate data-receiving party account information other than the receiving party account information input by the user) is found in the account information database, then the identity information and the found candidate data-receiving party account information are stored in the list of corresponding relationships between identity information and candidate data-receiving party account information, thereby updating the list of corresponding relationships between identity information and candidate data-receiving party account information.

Based on the embodiment shown in figure 2, the method can further comprise step 170.

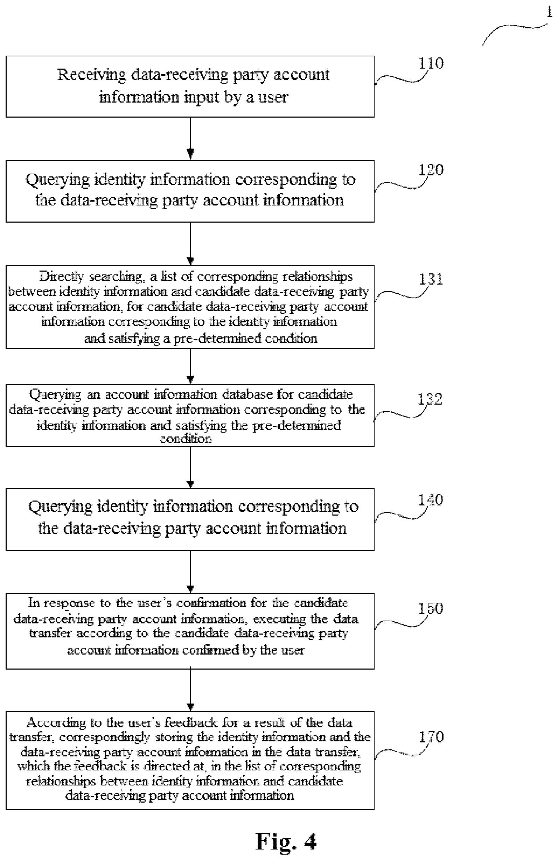

With reference to figure 4, in step 170, according to the user's feedback on a result of the data transfer, the identity information and the data-receiving party account information in the data transfer, which the feedback is directed at, are correspondingly stored in the list of corresponding relationships between identity information and candidate data-receiving party account information.

Particularly, data-receiving party account information input by the user and identity information corresponding to the receiving party account information can be recorded according to user complaint information when wrong account information is input by the user and the data is transferred to a wrong account due to that the same identity information corresponds to a plurality of pieces of similar (the degree of similarity greater than a pre-determined threshold) account information in a data transfer process.

The technical solutions of the present application can be applied to a third-party transaction platform-based transfer operation; and in a third-party transaction platform-based transfer operation, wrong account information may be input during transferring due to similarity between accounts, and fund is transferred to a wrong receiving party account, which may lead to property loss of the user. By means of the technical solutions of the present application, the above-mentioned problem can be solved. Description is made below to the application scenario where the present application is applied to transferring.

A user logs into the account of his/her own and enters a transfer page, and inputs receiving party account information on the transfer page; and the receiving party account information input by the user is received, wherein the account information is an e-mail account of zhangsan01@xxx.com.

According to the account information of zhangsan01@xxx.com input by the user, identity information corresponding thereto is queried, and the found identity information corresponding thereto is "ZhangSan".

Account information, of which the degree of similarity with the account information of zhangsan01@xxx.com input by the user is greater than a pre-determined threshold, is queried in the account information corresponding to "ZhangSan", including zhangsan01@xxx.com, zhangsan001@xxx.com, zhang.san01@xxx.com, and zhangsan.01@xxx.com.

The user is reminded of the found account information, and the user confirms that the account information for transferring is zhangsan01@xxx.com according to the reminded account information and carries out a confirmation operation, for example, clicking a confirmation button.

In response to the user's confirmation for the account information, a corresponding amount is transferred to the account of zhangsan01@xxx.com confirmed by the user. After confirming the account information, the user further needs to input an amount to be transferred and input a pre-set password (payment password); and after it is verified that the payment password input by the user is correct, the corresponding amount is transferred to the account according to the account information for transferring confirmed by the user and the input amount. By implementing the technical solutions of the present application during transferring, the probability of transferring fund to a wrong account can be reduced.

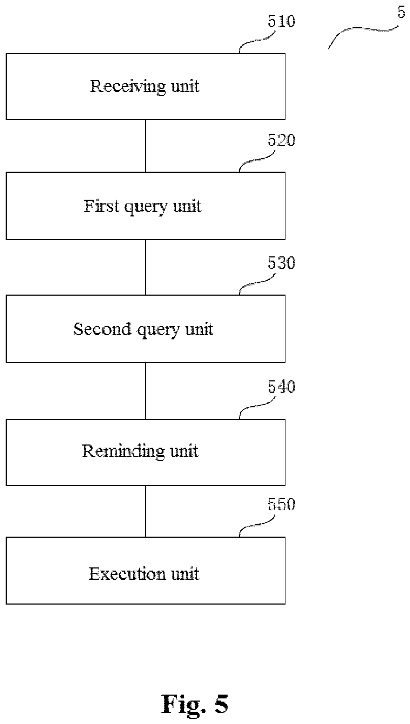

Based on the same inventive concept as the method, the present application also provides a data transfer device. Shown in figure 5 is a schematic diagram of the data transfer device 5. The data transfer device comprises:
a receiving unit 510 configured to receive data-receiving party account information input by a user;
a first query unit 520 configured to query identity information corresponding to the data-receiving party account information;
a second query unit 530 configured to query candidate data-receiving party account information corresponding to the identity information and satisfying a pre-determined condition;
a reminding unit 540 configured to remind the user of the candidate data-receiving party account information; and
an execution unit 550 configured to, in response to the user's confirmation for the candidate data-receiving party account information, execute the data transfer according to the candidate data-receiving party account information confirmed by the user.

The pre-determined condition comprises a degree of similarity with the data-receiving party account information input by the user being greater than a pre-determined threshold.

Wherein, if the candidate data-receiving party account information includes a plurality of pieces of candidate data-receiving party account information, the user's confirmation for the candidate data-receiving party account information is the user's selection from the plurality of pieces of candidate data-receiving party account information.

Wherein, the second query unit 530 comprises at least one sub-unit of the following:
a first query sub-unit configured to directly query a list of corresponding relationships between identity information and candidate data-receiving party account information for candidate data-receiving party account information corresponding to the identity information and satisfying a pre-determined condition, wherein candidate data-receiving party account information corresponding to various identity information and satisfying the pre-determined condition is pre-stored in the list of corresponding relationships between identity information and candidate data-receiving party account information; and
a second query sub-unit configured to query an account information database for candidate data-receiving party account information corresponding to the identity information and satisfying a pre-determined condition.

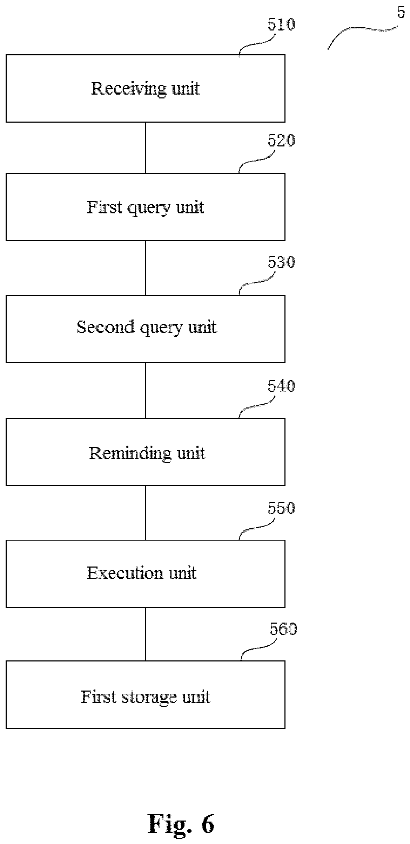

With reference to figure 6, the device further comprises a first storage unit 560 configured to, after the candidate data-receiving party account information corresponding to the identity information and satisfying a pre-determined condition is found in the account information database, correspondingly store the identity information and the found candidate data-receiving party account information in the list of corresponding relationships between identity information and candidate data-receiving party account information.

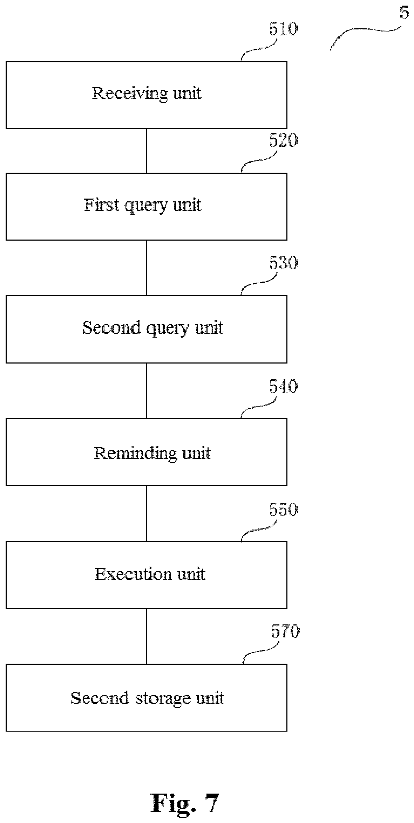

With reference to figure 7, the device further comprises a second storage unit 570 configured to, according to the user's feedback for a result of the data transfer, correspondingly store the identity information and the data-receiving party account information in the data transfer, which the feedback is directed at, in the list of corresponding relationships between identity information and candidate data-receiving party account information.

Wherein, the execution unit 550 is further configured to remind the user of the degree of similarity of the candidate data-receiving party account information with the data-receiving party account information input by the user and the candidate data-receiving party account information in an associated manner.

It should be noted that, the present application may be implemented in software and/or a combination of software and hardware. For example, each device in the present application may be implemented using an application-specific integrated circuit (ASIC) or any other similar hardware device. In an embodiment, the software programs of the present application may be executed through a processor to implement the above steps or functions. Similarly, the software programs of the present application (comprising relevant data structures) may be stored in a computer-readable recording medium, for example, a RAM, a magnetic or optical driver, a floppy disk, or a similar device. Furthermore, some steps or functions of the present application may be implemented using hardware, for example, a circuit cooperating with the processor so as to execute each step or function.

For those skilled in the art, it is clear that the present application is not limited to the details of the above exemplary embodiments, and the present invention can be implemented in other particular forms without departing from the spirit or basic features of the present invention. Thus, in any way, the embodiments should be regarded as exemplary, not limitative; the scope of the present application is limited by the appended claims, instead of the above depiction. Thus, all variations falling into the meaning and scope of equivalent elements of the claims should be covered within the present invention. No reference numerals in the claims should be regarded as limiting the involved claims. Additionally, it is obvious that the term "comprise" does not exclude other units or steps, and singularity does not exclude plurality. A plurality of units or devices set forth in a system claim may also be implemented by a single unit or device through software or hardware. Terms such as first and second are used to indicate names, but do not indicate any particular sequence.

Although exemplary embodiments are specifically illustrated and described above, a person skilled in the art would appreciate that changes in the forms and details thereof are possible without departing from the spirit and scope of the claims.

## Claims

1. A data transfer method, **characterized by** comprising:
receiving data-receiving party account information input by a user;
querying identity information corresponding to the data-receiving party account information;
querying candidate data-receiving party account information corresponding to the identity information and satisfying a pre-determined condition;
reminding the user of the candidate data-receiving party account information; and
in response to the user's confirmation for the candidate data-receiving party account information, executing the data transfer according to the candidate data-receiving party account information confirmed by the user.

2. The data transfer method according to claim 1, wherein the pre-determined condition comprises a degree of similarity with the data-receiving party account information input by the user being greater than a pre-determined threshold.

3. The data transfer method according to claim 1, wherein if the candidate data-receiving party account information includes a plurality of pieces of candidate data-receiving party account information, the user's confirmation for the candidate data-receiving party account information is the user's selection from the plurality of pieces of candidate data-receiving party account information.

4. The data transfer method according to claim 1, wherein the step of querying candidate data-receiving party account information corresponding to the identity information and satisfying a pre-determined condition comprises at least one of the following:
directly querying a list of corresponding relationships between identity information and candidate data-receiving party account information for candidate data-receiving party account information corresponding to the identity information and satisfying the pre-determined condition, wherein candidate data-receiving party account information corresponding to various identity information and satisfying the pre-determined condition is pre-stored in the list of corresponding relationships between identity information and candidate data-receiving party account information; and
querying an account information database for candidate data-receiving party account information corresponding to the identity information and satisfying a pre-determined condition.

5. The data transfer method according to claim 4, wherein after the candidate data-receiving party account information corresponding to the identity information and satisfying a pre-determined condition is found in the account information database, the identity information and the found candidate data-receiving party account information are correspondingly stored in the list of corresponding relationships between identity information and candidate data-receiving party account information.

6. The data transfer method according to claim 4, wherein according to the user's feedback for a result of the data transfer, the identity information and the data-receiving party account information in the data transfer, which the feedback is directed at, are correspondingly stored in the list of corresponding relationships between identity information and candidate data-receiving party account information.

7. The data transfer method according to claim 2, wherein the step of reminding the user of the candidate data-receiving party account information comprises: reminding the user of the degree of similarity of the candidate data-receiving party account information with the data-receiving party account information input by the user and the candidate data-receiving party account information in an associated manner.

8. A data transfer device, **characterized by** comprising:
a receiving unit configured to receive data-receiving party account information input by a user;
a first query unit configured to query identity information corresponding to the data-receiving party account information;
a second query unit configured to query candidate data-receiving party account information corresponding to the identity information and satisfying a pre-determined condition;
a reminding unit configured to remind the user of the candidate data-receiving party account information; and
an execution unit configured to, in response to the user's confirmation for the candidate data-receiving party account information, execute the data transfer according to the candidate data-receiving party account information confirmed by the user.

9. The data transfer device according to claim 8, wherein the pre-determined condition comprises a degree of similarity with the data-receiving party account information input by the user being greater than a pre-determined threshold.

10. The data transfer device according to claim 8, wherein if the candidate data-receiving party account information includes a plurality of pieces of candidate data-receiving party account information, the user's confirmation for the candidate data-receiving party account information is the user's selection from the plurality of pieces of candidate data-receiving party account information.

11. The data transfer device according to claim 8, wherein the second query unit comprises at least one sub-unit of the following:
a first query sub-unit configured to directly query a list of corresponding relationships between identity information and candidate data-receiving party account information for candidate data-receiving party account information corresponding to the identity information and satisfying the pre-determined condition, wherein candidate data-receiving party account information corresponding to various identity information and satisfying the pre-determined condition is pre-stored in the list of corresponding relationships between identity information and candidate data-receiving party account information; and
a second query sub-unit configured to query an account information database for candidate data-receiving party account information corresponding to the identity information and satisfying a pre-determined condition.

12. The data transfer device according to claim 11, further comprising: a first storage unit configured to, after the candidate data-receiving party account information corresponding to the identity information and satisfying a pre-determined condition is found in the account information database, correspondingly store the identity information and the found candidate data-receiving party account information in the list of corresponding relationships between identity information and candidate data-receiving party account information.

13. The data transfer device according to claim 11, further comprising: a second storage unit configured to, according to the user's feedback for a result of the data transfer, correspondingly store the identity information and the data-receiving party account information in the data transfer, which the feedback is directed at, in the list of corresponding relationships between identity information and candidate data-receiving party account information.

14. The data transfer device according to claim 9, wherein the execution unit is further configured to remind the user of the degree of similarity of the candidate data-receiving party account information with the data-receiving party account information input by the user and the candidate data-receiving party account information in an associated manner.
